# EUROPEAN PATENT SPECIFICATION

(11) **EP 3 897 194 B1**
(45) Date of publication and mention of the grant of the patent: **06.09.2023**
(21) Application number: 19816592.0
(22) Date of filing: 02.12.2019
(51) Int. Cl.: A23L 27/00, A23L 3/46, A23L 2/39, A23L 27/12, A23P 10/30

(54) **STABLE SPRAY-DRIED PARTICLES**
STABILE SPRÜHGETROCKNETE PARTIKEL
PARTICULES SÉCHÉES PAR PULVÉRISATION STABLES

(30) Priority: 20.12.2018 US 201862782874 P
(43) Date of publication of application: 27.10.2021
(73) Proprietor: Givaudan SA, 1214 Vernier (CH)
(72) Inventor: SHERMAN, Gregory Alan, Cincinnati, Ohio 45245 (US); CHANEY, Michael, Covington, Kentucky 41015 (US)
(74) Representative: Global Patents
(86) International application number: PCT/EP2019/083348
(87) International publication number: WO 2020/126443

(56) References cited:
- EP-A1- 1 214 892
- WO-A1-01/35764
- WO-A1-2008/075945
- US-A- 3 455 838
- US-A- 5 087 461
- US-A- 5 124 162

## Description

### TECHNICAL FIELD

The present disclosure relates to moisture and oxygen stable spray-dried particles including at least one volatile active component and methods of producing such particles. More particularly, the present disclosure relates to stable spray-dried particles including at least one volatile active component encapsulated in a matrix made from dextrin, potato maltodextrin and sugar.

### BACKGROUND

Encapsulating volatile components in a solid encapsulating matrix is a well-known method. The advantages are numerous and include, for example, (i) the protection of the volatile component against undesired evaporation during storage, (ii) the protection of chemically sensitive components against chemical degradation, such as oxidation and hydrolysis, and (iii) the possibility to control the release of the encapsulated component.

Numerous methods can be used to produce solids comprising encapsulated volatile ingredients. However, the most common and economical way to encapsulate a volatile component involves the step of emulsifying the volatile component in an aqueous phase comprising encapsulating materials to form an oil-in-water emulsion and drying this emulsion by spray drying, spray granulation or spray coating to obtain a dry emulsion. The morphology of the dry product is that of a multitude of oil droplets in a glassy, polar, encapsulating matrix. The polar, encapsulating matrix is usually based on carbohydrate materials, such as modified starches, maltodextrins, mono-dissacharides and gums.

US 5 087 461 A discloses a spray-dried encapsulated particles comprising 50-70 parts succinyl modified starch, 15-30 parts maltodextrin, 7-15 parts corn syrup solid , 7-15 parts disaccharide, 2-15 parts butter vanilla flavor. US 5 087 461 A also discloses cookies comprising the spray dried particles.

More and more consumers see these types of encapsulating matrices, especially modified starches, as something which is chemical or artificial and thus not desired. As a result, one such trend is the drive towards so-called "cleaner label" products. More specifically, the demand from customers and consumers is, in particular, directed to products that are free from or have a reduced percentage of artificial ingredients, which include modified starches and maltodextrins currently used as encapsulation ingredients.

There remains a need to provide spray dry carriers which can deliver superior authentic flavour to food or beverage products, and which can further benefit customers and consumers by achieving the foregoing whilst contributing to a cleaner label for the food or beverage product.

### SUMMARY

The stable spray-dried particles include a water-soluble matrix including from about 5% to about 30% emulsifier; from about 20% to about 75% filler; and from about 20% to about 50% mono, di and trisaccharides, based on the total weight of the matrix; and at least one active component encapsulated in the matrix. The emulsifier is dextrin and the filler is potato maltodextrin.

In another illustrative embodiment, not part of the present invention, a process for preparing stable particles includes the steps of a) preparing a water-soluble matrix comprising from about 5% to about 30% dextin; from about 20% to about 75% potato maltodextrin; and from about 20% to about 50% mono, di and trisaccharides, based on the total weight of the matrix; b) dissolving the matrix in water; c) adding an active component; d) mixing the matrix and active component to form an emulsion; and e) drying the emulsion.

These and other features, aspects and advantages of specific embodiments will become evident to those skilled in the art from a reading of the present disclosure.

### DETAILED DESCRIPTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims.

The present invention is define by the claims.

The present invention discloses a stable spray-dried particles comprising: a water-soluble matrix including from 5% to 30% emulsifier; from 20% to 75% filler; and from 20% to 50% mono, di and trisaccharides, based on the total weight of the matrix; and at least one active component encapsulated in the matrix; wherein the emulsifier is dextrin and the filler is potato maltodextrin.

The present disclosure relates to spray-dried particles having a water-soluble matrix and a volatile active component encapsulated therein. The water-soluble matrix according to the present disclosure includes the combination of an emulsifier, a filler and mono, di and trisaccharides.

In one embodiment, the water-soluble dried particles according to the present disclosure have an average size of from about 10 µm to about 200 µm; in another embodiment from about 50 µm to about 100 µm. In one example, a particle may be unregularly shaped and the size of the particle is defined as the mean between the largest diameter of the particle and the smallest diameter of the particle. In another example, a particle may be spherical and the size of the particle is defined as the diameter of the particle. The average size of a collection of particles may be obtained by different methods. For example, the particles may be observed under an optical microscope and the diameters of the particles, or of an arbitrary number of the particles, measured one by one and averaged to provide a number-averaged particle size. Alternatively, a cloud of particles may be measured by light scattering measurements using a Malvern 2000S instrument and the Mie scattering theory. The principle of the Mie theory and how light scattering can be used to measure capsule size can be found, for example H. C. van de Hulst, Light scattering by small particles, Dover, New York, 1981. The primary information provided by static light scattering is the angular dependence of the light scattering intensity, which in turn is linked to the size and shape of the particle in the cloud. However, in a standard operation method, the size of a sphere having a size equivalent to the size of the diffracting object, whatever the shape of this object, is calculated by the Malvern proprietary software provided with the apparatus. In case of polydisperse samples, the angular dependence of the overall scattering intensity contains information about the size distribution in the sample. The output is a histogram representing the total volume of capsules belonging to a given size class as a function of the capsule size, whereas an arbitrary number of 50 size classes can be chosen. Light scattering provides a volume-averaged particle size.

The term "emulsifier", as used herein, is intended to mean a surface-active agent that facilitates the mixing of two or more liquid substances that would separate into its component parts under normal conditions. The emulsifier is dextrin. Dextrins are a group of low-molecular-weight carbohydrates produced by the hydrolysis of starch or glycogen. Dextrins used in the food industry are classified as white dextrins and are less viscous than the starch that they came from (potato, corn or rice, for instance). In one embodiment, the dextrin is derived from corn.

In accordance with one embodiment, dextrins useful in the present disclosure are capable of stabilizing an emulsion, i.e. capable of reducing the surface tension of water. For example, the surface tension of distilled water is 72.7 mN/m. Among the following, corn dextrin, modified starch, sugar and maltodextrin, corn dextrin is the most effective at reducing the surface tension of water-Corn Dextrin (1% solution) 37 mN/m; Modified Starch (1% solution) 45.2 mN/m; Sugar (5% solution) 72.5 mN/m; and 10 E Maltodextrin (5% solution) 66 mN/m.

The amount of dextrin present in the matrix can vary widely and may be based on the particular needs of the intended consumer, or the intended product form of the spray-dried particles. Also, the amount of dextrin present will depend on the percent flavour load, adjusted as needed to form a good emulsion to produce good encapsulation. Dextrin is present in an amount of about 5% to about 30% by weight based on the total weight of the matrix. In another embodiment, dextrin may be present in an amount of about 7% to about 25% by weight based on the total weight of the matrix. In another embodiment, dextrin may be present in an amount of about 10% to about 20% by weight based on the total weight of the matrix. Dextrins are commercially available, for example, from Ingredion (Westchester, IL), under the trademark CAPSUL 2730.

Another component of the water-soluble matrix according to the present disclosure is a filler. The filler is potato maltodextrin. The potato maltodextrin is present in an amount of about 20% to about 75% by weight based on the total weight of the matrix. In another embodiment, potato maltodextrin may be present in an amount of about 40% to about 60% by weight based on the total weight of the matrix. Potato maltodextrins are commercially available for example, from AVEBE of Veedam, The Netherlands.

Another component of the water-soluble matrix according to the present disclosure are the mono, di and trisaccharides. The mono, di and trisaccharides are present in an amount of about 20% to about 50% by weight based on the total weight of the matrix. In another embodiment, mono, di and trisaccharides may be present in an amount of about 30% to about 40% by weight based on the total weight of the matrix. Illustrative examples of mono, di and trisaccharides are glucose, fructose, maltose, sucrose, raffinose and materials, having a high content of such sugars like fruit juice solids. In one embodiment, at least 50 wt. % of the mono, di and trisaccharide material is a disaccharide as a high amount of monosaccharide may result in a somewhat sticky product whereas a high amount of trisaccharide may lead to a product more prone to oxidation. In another embodiment according to the present disclosure the mono, di and trisaccharide material is sucrose.

In one embodiment, the water-soluble matrix includes at least one active component encapsulated therein. In one embodiment, the at least one active component is not restricted to a specific class of molecules. It may refer to a substance, a compound, and/or an ingredient, alone or a mixture thereof.

In one embodiment, the at least one active component is selected from volatile flavours and fragrances. The terms "flavour or fragrance" encompass flavour or fragrance ingredients or compositions of current use in the flavour and/or fragrance industry, of both natural and synthetic origin. It includes single compounds and mixtures. Specific examples of such flavour or fragrance ingredients may be found in the current literature, e.g. in Fenaroli's Handbook of flavour ingredients, 1975, CRC Press; Synthetic Food adjuncts, 1947 by M. B. Jacobs, edited by Van Nostrand; or Perfume and Flavor Chemicals by S. Arctander, 1969, Montclair, N.J. (USA). The flavour or fragrance ingredients may be present in the form of a mixture with solvents, adjuvants, additives and/or other components, generally those of current use in the flavours and fragrance industry.

In another embodiment, the at least one volatile active component may be selected from pharmaceuticals, vitamins, herbicides, fungicides, insecticides, detergents, cleaning agents and dyes.

Flavour and fragrance compositions may include a broad variety of mixtures of aromatic and fragrant ingredients, such as terpenes, terpene derivatives, esters, alcohols, ethers, ketones, lactones, aldehydes, anthranilates, nitriles, mercaptans, N- and S-heterocycles and the like.

Examples of suitable flavour ingredients include, but are not limited to, natural flavours, artificial flavours, spices, seasonings, synthetic flavour oils and flavoring aromatics and/or oils, oleoresins, essences, and distillates, and a combination comprising at least one of the foregoing.

Flavour oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil; useful flavoring agents include artificial, natural and synthetic fruit flavours such as vanilla, and citrus oils including lemon, orange, lime, grapefruit, yuzu, sudachi, and fruit essences including apple, pear, peach, grape, raspberry, blackberry, gooseberry, blueberry, strawberry, cherry, plum, prune, raisin, cola, guarana, neroli, pineapple, apricot, banana, melon, apricot, cherry, tropical fruit, mango, mangosteen, pomegranate, papaya, and so forth.

Additional exemplary flavours imparted by a flavour ingredient include a milk flavour, a butter flavour, a cheese flavour, a cream flavour, and a yogurt flavour, a vanilla flavour, teaflavours, such as a green tea flavour, an oolong tea flavour, a cocoa flavour, a chocolate flavour, and a coffee flavour; mint flavours, such as a peppermint flavour, a spearmint flavour, and a Japanese mint flavour; spicy flavours, such as an asafetida flavour, an ajowan flavour, an anise flavour, an angelica flavour, a fennel flavour, an allspice flavour, a cinnamon flavour, a chamomile flavour, a mustard flavour, a cardamom flavour, a caraway flavour, a cumin flavour, a clove flavour, a pepper flavour, a coriander flavour, a sassafras flavour, a savory flavour, a Zanthoxyli Fructus flavour, a perilla flavour, a juniper berry flavour, a ginger flavour, a star anise flavour, a horseradish flavour, a thyme flavour, a tarragon flavour, a dill flavour, a capsicum flavour, a nutmeg flavour, a basil flavour, a parsley flavour, a marjoram flavour, a rosemary flavour, a bayleaf flavour, and a wasabi (Japanese horseradish) flavour; a nut flavour such as an almond flavour, a hazelnut flavour, a macadamia nut flavour, a peanut flavour, a pecan flavour, a pistachio flavour, and a walnut flavour; floral flavours; and vegetable flavours, such as an onion flavour, a garlic flavour, a cabbage flavour, a carrot flavour, a celery flavour, mushroom flavour, and a tomato flavour.

According to some embodiments, flavour ingredients may also include aldehydes and esters such as cinnamyl acetate ((E)-3-phenylprop-2-en-1-yl acetate); cinnamaldehyde ((2E)-3-phenylprop-2-enal); citral diethylacetal ((E)-1,1-dimethoxy-3,7-dimethylocta-2,6-diene), dihydrocarvyl acetate (2-methyl-5-prop-1-en-2-ylcyclohexyl acetate), eugenyl formate ((2S)-1,3,3-trimethylbicyclo[2.2.1]heptan-2-yl acetate), p-methylanisol (1-methoxy-4-methylbenzene), and so forth can be used. Further examples of aldehyde flavourings include acetaldehyde (apple), benzaldehyde (cherry, almond), anisic aldehyde (4-methoxybenzaldehyde) (licorice, anise), cinnamic aldehyde ((2E)-3-phenylprop-2-enal) (cinnamon), citral (E)-3,7-dimethylocta-2,6-dienal), i.e., alpha-citral ((EE)-3,7-dimethylocta-2,6-dienal (lemon, lime), neral, i.e., beta-citral ((EZ)-3,7-dimethylocta-2,6-dienal (lemon, lime), decanal (orange, lemon), ethyl vanillin (vanilla, cream), heliotrope, i.e., piperonal (benzo[d][1,3]dioxole-5-carbaldehyde) (vanilla, cream), vanillin (vanilla, cream), alpha-amyl cinnamaldehyde ((E or Z)-2-benzylideneheptanal) (spicy fruity flavours), butyraldehyde (butanal) (butter, cheese), valeraldehyde (pentanal) (butter, cheese), citronellal (3,7-dimethyloct-6-enal) (modifies, many types), decanal (citrus fruits), aldehyde C-8 (octanal) (citrus fruits), aldehyde C-9 (nonanal) (citrus fruits), aldehyde C-12 (dodecanal) (citrus fruits), 2-ethyl butyraldehyde (2-ethylbutanal) (berry fruits), hexenal, i.e., trans-2 hexenal (berry fruits), tolyl aldehyde (4-methylbenzaldehyde) (cherry, almond), veratraldehyde (3,4-dimethoxybenzaldehyde) (vanilla), 2,6-dimethyl-5-heptenal, i.e., melonal (melon), 2,6-dimethyloctanal (green fruit), and 2-dodecenal (citrus, mandarin), and the like.

In another embodiment, flavour ingredients include natural compounds derived from Maillard reactions.

Examples of suitable fragrance ingredients include, but are not limited to hex-3-en-1-yl butyrate; 2-methyl-1-phenylpropan-2-yl acetate; 2-methyl-1-phenylpropan-2-yl butyrate; 4-(tert-butyl)cyclohexyl acetate; undecan-2-one; 2-benzylideneoctanal; 3,7-dimethylnona-1,6-dien-3-yl acetate; 3,7-dimethylocta-2,6-dien-1-yl acetate; 3,7-dimethylocta-2,6-dienal; non-6-enal; tridec-2-enenitrile; 1-((1,8a)-1,4,4,6-tetramethyl-2,3,3a,4,5,8-hexahydro-1-5,8a-methanoazulen-7-yl)ethanone; 1-(2,3,8,8-tetramethyl-1,2,3,4,5,6,7,8-octahydronaphthalen-2-yl)ethanone; 1-butoxy-1-oxopropan-2-yl butyrate; 2-methyl-1-phenylpropan-2-ol; allyl 2-(isopentyloxy)acetate; allyl 3-cyclohexylpropanoate; methyl non-2-ynoate; undec-9-enal; 1,3,4,5,6,7-hexahydro-.beta. ,1,1,5,5-pentamethyl-2-2,4a-ethanonaphthalene-8-ethanol; 1-(1-ethoxyethoxy)hex-3-ene; 1-(2,6,6-trimethylcyclohex-3-en-1-yl)but-2-en-1-one; 1-(2,6,6-trimethylcyclohexa-1,3-dien-1-yl)but-2-en-1-one; 1,1-diethoxy-3,7-dimethylocta-2,6-diene; 2-ethyl-4-(2,2,3-trimethylcyclopent-3-en-1-yl)but-2-en-1-ol; 3,7-dimethylnona-1,6-dien-3-ol; 3,7-dimethylocta-2,6-dien-1-yl isobutyrate; 3-methyl-2-(pent-2-en-1-yl)cyclopent-2-enone; 4-(2,5,6,6-tetramethylcyclohex-2-en-1-yl)but-3-en-2-one; 4-(2,6,6-trimethylcyclohex-1-en-1-yl)but-3-en-2-one; 4-(2,6,6-trimethylcyclohex-2-en-1-yl)but-3-en-2-one; 1,3,3-trimethylbicyclo[2.2.1]heptan-2-yl acetate; (2,4)-1,7,7-trimethylbicyclo[2.2.1]heptan-2-yl acetate; (ethoxymethoxy)cyclododecane; 1-(2,6,6-trimethylcyclohexa-1,3-dien-1-yl)but-2-en-1-one; 3,4,5,6,6-pentamethylhept-3-en-2-one; 3,7,11-trimethyldodeca-1,6,10-trien-3-yl acetate; 3,7-dimethylocta-2,6-dien-1-ol; 3,7-dimethylocta-2,6-dienal; 3-methyl-5-(2,2,3-trimethylcyclopent-3-en-1-yl)pent-4-en-2-ol; 3-methylcyclotetradec-5-enone; 4-((3a,7a)-hexahydro-1-4,7-methanoinden-5(6)-ylidene)butanal; 4-(2,6,6-trimethylcyclohex-2-en-1-yl)but-3-en-2-one; 4,11,11-trimethyl-8-methylenebicyclo[7.2.0]undec-4-ene; 4-methyldec-3-en-5-ol; 5-methylheptan-3-one oxime; methyl non-2-enoate; oxacyclohexadec-12-en-2-one; 1-((2-(tert-butyl)cyclohexyl)oxy)butan-2-ol; 1-(3,3-dimethylcyclohex-1-en-1-yl)pent-4-en-1-one; 1,2,4)-1,3,3-trimethylbicyclo[2.2.1]heptan-2-ol; 1,2,4)-2'-isopropyl-1,7,7-trimethylspiro[bicyclo[2.2.1]heptane-2,4'-[1,3]dioxane]; 1,2,5)-2-ethoxy-2,6,6-trimethyl-9-methylenebicyclo[3.3.1]nonane; 112) (4-(4-hydroxyphenyl)butan-2-one; 1-methyl-2-(5-methylhex-4-en-2-yl)cyclopropyl)-methanol; 1-methyl-4-(4-methylpent-3-en-1-yl)cyclohex-3-enecarbaldehyde; 1-methyl-4-propan-2-ylcyclohexa-1,4-diene; (1s,4s)-1,3,3-trimethyl-2-oxabicyclo[2.2.2]octane; 2-(4-methylcyclohex-3-en-1-yl)propan-2-yl acetate; 2)-ethyl 3-isopropylbicyclo[2.2.1]hept-5-ene-2-carboxylate; 2,2-dimethoxyethyl)benzene; 2,6)-3,7-dimethylnona-2,6-dienenitrile; 2,6-dimethyloctan-2-ol; 2-isopropyl-5-methylcyclohexanol; 2-methyl-4-oxo-4-pyran-3-yl isobutyrate; 2-methyl-6-methyleneoct-7-en-2-yl acetate; 3-(4-isopropylphenyl)-2-methylpropanal; 3,5,5-trimethylhexyl acetate; 3,5-dimethylhex-3-en-2-yl)oxy)-2-methylpropyl cyclopropanecarboxylate; 3,7-dimethyloct-6-en-1-yl acetate; 3,7-dimethyloct-6-en-1-yl formate; 3,7-dimethyloct-6-en-1-yl propionate; 3,7-dimethyloct-6-enenitrile; 3,7-dimethylocta-1,6-dien-3-yl acetate; (3a,4,7,7a)-ethyl octahydro-1-4,7-methanoindene-3a-carboxylate; (3a,6,7a)-3a,4,5,6,7,7a-hexahydro-1-4,7-methanoinden-6-yl acetate; (3a,6,7a)-3a,4,5,6,7,7a-hexahydro-1-4,7-methanoinden-6-yl isobutyrate; (3a,6,7a)-3a,4,5,6,7,7a-hexahydro-1-4,7-methanoinden-6-yl propionate; (3-methyl-2-pentylcyclopent-2-enone; 4,7-dimethyloct-6-en-3-one; 4-methylene-2-phenyltetrahydro-2-pyran; 6,6-dimethoxy-2,5,5-trimethylhex-2-ene; allyl heptanoate; cyclohexyl 2-hydroxybenzoate; ethyl 2,6,6-trimethylcyclohexa-1,3-diene-1-carboxylate; ethyl heptanoate; ethyl hexanoate; hexyl isobutyrate; pentyl 2-hydroxybenzoate; propanedioic acid 1-(1-(3,3-dimethylcyclohexyl)ethyl) 3-ethyl ester; 3-methyl-4-(2,6,6-trimethylcyclohex-2-en-1-yl)but-3-en-2-one; 1-(3,3-dimethylcyclohexyl)ethyl formate; 1-(3,5,5,6,8,8-hexamethyl-5,6,7,8-tetrahydronaphthalen-2-yl)ethanone; 1-(spiro[4.5]dec-6-en-7-yl)pent-4-en-1-one; 1,1,2,3,3-pentamethyl-2,3,6,7-tetrahydro-1-inden-4(5)-one; decanal; 2-methyldecanal; undec-10-enal; undecanal; 2-methylundecanal; 1-methyl-4-(prop-1-en-2-yl)cyclohex-1-ene; 1-methyl-4-(prop-1-en-2-yl)cyclohex-1-ene; 1-methyl-4-(propan-2-ylidene)cyclohex-1-ene; 2- (isopropyl 2-methyl butanoate; 2-(1-(3,3-dimethylcyclohexyl)ethoxy)-2-methylpropyl cyclopropanecarboxylate; 2-(2-(4-methylcyclohex-3-en-1-yl)propyl)cyclopentanone; 2-(2,4-dimethylcyclohexyl)pyridine; 2-(sec-butyl)cyclohexanone; 2-(tert-butyl)cyclohexyl acetate; 2,2,2-trichloro-1-phenylethyl acetate; 2,2,5-trimethyl-5-pentylcyclopentanone; 2,2-dimethyl-2-pheylethyl propanoate; 2,4,6-trimethyl-4-phenyl-1,3-dioxane; 2,4,6-trimethylcyclohex-3-enecarbaldehyde; 2,6,10-trimethylundec-9-enal; 2,6-dimethylhept-5-enal; 2,6-dimethylheptan-2-ol; 2-cyclohexylidene-2-(o-tolyl)acetonitrile; 2-cyclohexylidene-2-phenylacetonitrile; 2-ethyl--methyl--(m-tolyl)butanamide; 2-isopropyl-5-methylcyclohexanone; 2-methyl-4-methylene-6-phenyltetrahydro-2-pyran; 2-methyldecanenitrile; 2-pentylcyclopentanone; 3-(3-isopropylphenyl)butanal; 3-(4-(tert-butyl)phenyl)-2-methylpropanal; 3-(4-ethylphenyl)-2,2-dimethylpropanal; 3-(4-isobutyl-2-methylphenyl)propanal; 3-(4-isobutylphenyl)-2-methylpropanal; 3,7-dimethyloct-6-en-1-ol; 3,7-dimethyloct-6-enal; 3,7-dimethylocta-1,6-dien-3-ol; 3,7-dimethyloctan-3-ol; 4-(4-methylpent-3-en-1-yl)cyclohex-3-enecarbaldehyde; 4-(tert-pentyl)cyclohexanone; 4,4a,5,9b-tetrahydroindeno[1,2-d][1,3]dioxine; 4-cyclohexyl-2-methylbutan-2-ol; 5-(sec-butyl)-2-(2,4-dimethylcyclohex-3-en-1-yl)-5-methyl-1,3-dioxane; 5-tert-butyl-2-methyl-5-propyl-2-furan; 6-(sec-butyl)quinoline; 6,8-dimethylnonan-2-ol; 6-ethyl-3-methyloct-6-en-1-ol; 8-(sec-butyl)-5,6,7,8-tetrahydroquinoline; 8,8-dimethyl-1,2,3,4,5,6,7,8-octahydronaphthalene-2-carbaldehyde; allyl 2-(cyclohexyloxy)acetate; dec-4-enal; dec-9-en-1-ol; dodec-2-enal; dodecanal; dodecanenitrile; ethyl 2-ethyl-6,6-dimethylcyclohex-2-enecarboxylate; ethyl 2-methylpentanoate; ethyl octanoate; hex-3-en-1-yl methyl carbonate; hexyl 2-hydroxybenzoate; methyl 3-oxo-2-pentylcyclopentaneacetate; oxacyclohexadecan-2-one; and the like.

In one embodiment, a major application of the present disclosure is related to the field of flavours. In this respect it is noted that the final spray-dried product may be capable of protecting and retaining about 5 to about 40 wt. % and in another embodiment about 20 to about 30 wt. % flavour active component, depending on the type of active component and based on the total weight of the flavour. Examples of flavour active components, in particular aromatic or volatile flavour active components, to be encapsulated in the matrix according to the present disclosure are for instance essential oils, like citrus oil and other volatile flavour active components, like bakery and savoury flavour active components.

The spray-dried particles may include from about 0.5% to about 50%, in another embodiment from about 1% to about 30%, in yet another embodiment about 25%, or any individual number within the range, by weight of the particle of at least one active component. In one embodiment, the level of free active component, (i.e. surface oil level) is lower than about 1.5%, in another embodiment lower than about 1%, in another embodiment lower than about 0.3% and in yet another embodiment lower than about 0.15% by weight of the spray-dried particles. Surface oil level should be minimized. The amount of surface oil that can be tolerated without negative impact on processing and/or encapsulation performance will depend on the composition of the flavour which will determine its volatility and oxidation stability. Lower oil loading and increasing the emulsifier level will help to reduce surface oil. For higher oil loadings the addition of plasticizer such as fruit or vegetable concentrates containing natural sugars and food acids will help reduce surface oil.

The spray-dried particles according to the present disclosure may be used in a wide variety of consumables or applications and is not restricted to any particular physical mode or product form. According to the present disclosure, the term "consumable" refers to products for consumption by a subject, typically via the oral cavity (although consumption may occur via non-oral means such as inhalation), for at least one of the purposes of enjoyment, nourishment, or health and wellness benefits. Consumables may be present in any form including, but not limited to, liquids, solids, semi-solids, tablets, capsules, lozenges, strips, powders, gels, gums, pastes, slurries, solutions, suspensions, syrups, aerosols and sprays. The term also refers to, for example, dietary and nutritional supplements. Consumables include compositions that are placed within the oral cavity for a period of time before being discarded but not swallowed. It may be placed in the mouth before being consumed, or it may be held in the mouth for a period of time before being discarded.

Broadly, consumables include, but are not limited to, comestibles of all kinds, confectionery products, baked products, sweet products, savoury products, fermented products, dairy products, beverages, oral care products, nutraceuticals and pharmaceuticals.

Exemplary comestibles include, but are not limited to, chilled snacks, sweet and savoury snacks, fruit snacks, chips/crisps, extruded snacks, tortilla/com chips, popcorn, pretzels, nuts, other sweet and savoury snacks, snack bars, granola bars, breakfast bars, energy bars, fruit bars, other snack bars, meal replacement products, slimming products, convalescence drinks, ready meals, canned ready meals, frozen ready meals, dried ready meals, chilled ready meals, dinner mixes, meat analogues, frozen pizza, chilled pizza, soup, canned soup, dehydrated soup, instant soup, chilled soup, UHT soup, frozen soup, pasta, canned pasta, dried pasta, chilled/fresh pasta, noodles, plain noodles, instant noodles, cups/bowl instant noodles, pouch instant noodles, chilled noodles, snack noodles, dried food, dessert mixes, sauces, dressings and condiments, herbs and spices, spreads, jams and preserves, honey, chocolate spreads, nut-based spreads, and yeast-based spreads.

Exemplary confectionery products include, but are not limited to, chewing gum (which includes sugarized gum, sugar-free gum, functional gum and bubble gum), centerfill confections, chocolate and other chocolate confectionery, medicated confectionery, lozenges, tablets, pastilles, mints, standard mints, power mints, chewy candies, hard candies, boiled candies, breath and other oral care films or strips, candy canes, lollipops, gummies, jellies, fudge, caramel, hard and soft panned goods, toffee, taffy, liquorice, gelatin candies, gum drops, jelly beans, nougats, fondants, combinations of one or more of the above, and edible flavour compositions incorporating one or more of the above.

Exemplary baked products include, but are not limited to, alfajores, bread, packaged/industrial bread, unpackaged/artisanal bread, pastries, cakes, packaged/industrial cakes, unpackaged/artisanal cakes, cookies, chocolate coated biscuits, sandwich biscuits, filled biscuits, savoury biscuits and crackers, and bread substitutes.

Exemplary sweet products include, but are not limited to, breakfast cereals, ready-to-eat ("rte") cereals, family breakfast cereals, flakes, muesli, other ready to eat cereals, children's breakfast cereals, and hot cereals.

Exemplary savoury products include, but are not limited to, salty snacks (potato chips, crisps, nuts, tortilla-tostada, pretzels, cheese snacks, corn snacks, potato-snacks, ready-to-eat popcorn, microwaveable popcorn, pork rinds, nuts, crackers, cracker snacks, breakfast cereals, meats, aspic, cured meats (ham, bacon), luncheon/breakfast meats (hotdogs, cold cuts, sausage), tomato products, margarine, peanut butter, soup (clear, canned, cream, instant, ultrahigh temperature "UHT"), canned vegetables, and pasta sauces.

Exemplary dairy products include, but are not limited to, cheese, cheese sauces, cheese-based products, ice cream, impulse ice cream, single portion dairy ice cream, single portion water ice cream, multi-pack dairy ice cream, multi-pack water ice cream, take-home ice cream, take-home dairy ice cream, ice cream desserts, bulk ice cream, take-home water ice cream, frozen yoghurt, artisanal ice cream, milk, fresh/pasteurized milk, full fat fresh/pasteurized milk, semi skimmed fresh/pasteurized milk, long-life/uht milk, full fat long life/uht milk, semi skimmed long life/uht milk, fat-free long life/uht milk, goat milk, condensed/evaporated milk, plain condensed/evaporated milk, flavoured, functional and other condensed milk, flavoured milk drinks, dairy only flavoured milk drinks, flavoured milk drinks with fruit juice, soy milk, sour milk drinks, fermented dairy drinks, coffee whiteners, powder milk, flavoured powder milk drinks, cream, yoghurt, plain/natural yoghurt, flavoured yoghurt, fruited yoghurt, probiotic yoghurt, drinking yoghurt, regular drinking yoghurt, probiotic drinking yoghurt, chilled and shelf-stable desserts, dairy-based desserts, and soy-based desserts.

Exemplary beverages include, but are not limited to, flavoured water, soft drinks, fruit drinks, coffee-based drinks, tea-based drinks, juice-based drinks (includes fruit and vegetable), milk-based drinks, gel drinks, carbonated or non-carbonated drinks, powdered drinks, alcoholic or non-alcoholic drinks, and ready to drink liquid formulations of these beverages.

Exemplary fermented foods include, but are not limited to, cheese and cheese products, meat and meat products, soy and soy products, fish and fish products, grain and grain products, fruit and fruit products.

The spray-dried particles according to the present disclosure may be used in a wide variety of applications besides the food-related consumables mentioned hereinabove. In one embodiment, the spray-dried particles may be used in fragrance applications and especially in applications wherein a burst-like fragrance release is desired. There are numerous examples of situations, where such triggered release is desired by consumers. For example, the spray-dried particles may be admixed with a powder detergent, and the fragrance released when this mixture is added to water. Alternatively, the spray-dried particles may be used everywhere wherein moisture is involved, such as deodorant products, toilet blocs, dish wash tablets, pet litters, diapers, sanitary napkins, feminine hygiene products, mouth hygiene products such as denture cleaning tablets and toothpastes and the like.

The particles according to the present disclosure may be produced using standard spray drying equipment and typical conditions known to the art. In another embodiment, particles according to the present disclosure may be produced using multistage dryer (MSD) equipment and typical conditions known in the art. Conditions may naturally vary depending on the nature of the equipment and the material being sprayed, but the person skilled in the art can readily determine the appropriate conditions in every case with only routine experimentation. Typical examples of conditions that produce dry powder with a moisture content of less than 5% and water activity in the desirable range of from 0.05 to 0.30 at 25°C. Water activity (A_{w}) is the partial vapor pressure of water in a substance divided by the standard state partial vapor pressure of water. It is a measurement of the relative humidity of the sample in a closed chamber - basically A_{w} is the equilibrium humidity emitted by the sample material.

Typical parameters for use on a conventional tower spray dryer are:
Inlet temperature - 100-250°C
Outlet temperature - 60-120°C
The finished material size should be about greater than or equal to about 40 µm mean diameter by volume distribution, as measured by laser diffraction particle size instrument. Other non-limiting examples of suitable drying techniques include fluid bed drying, freeze drying, filtermat and drum drying.
The disclosure is further described with reference to the following non-limiting examples.

### EXAMPLES

The following examples are given solely for the purpose of illustration and are not to be construed as limitations of the present invention, as many variations of the invention are possible without departing from the spirit and scope of the present disclosure.

### Emulsion Utilizing Flavour Oil (Limonene)

The first emulsion includes a commercially available matrix including modified starch and a maltodextrin (Example A-control) used to encapsulate a limonene flavour. The second emulsion include the same limonene flavour encapsulated in a matrix according to the present disclosure (Example B).
Emulsions were prepared from the ingredients listed below:

**Table 1**

| (Example A) | | | |
|---|---|---|---|
| Ingredients (kg) | 15% load | 20% load | 25% load |
| Limonene | 4.5 | 6 | 7.5 |
| Modified Starch | 5.1 | 4.8 | 4.5 |
| Maltodextrin | 10.2 | 9.6 | 9 |
| Sugar | 10.2 | 9.6 | 9 |
| Distilled Water | 20 | 20 | 20 |

**Table 2**

| (Example B) | | | |
|---|---|---|---|
| Ingredients (kg) | 15% load | 20% load | 25% load |
| Limonene | 4.5 | 6 | 7.5 |
| Corn Dextrin | 5.1 | 4.8 | 4.5 |
| Potato Maltodextrin | 10.2 | 9.6 | 9 |
| Sugar | 10.2 | 9.6 | 9 |
| Distilled Water | 20 | 20 | 20 |

Emulsions according to the present disclosure were prepared as follows: Corn dextrin and filler (potato maltodextrin) were dissolved in water. The volatile active component was added to the water phase containing the dissolved emulsifier and filler under high shear mixing, for example, IKA mixer to create an emulsion. High shear mixing means mixing at a speed and time sufficient to produce an emulsion (1 micron or less as determined by light scattering particle size analysis) from the mixture of matrix ingredients and active component(s). By way of illustration, but not in limitation, the matrix ingredients and active component(s) may be mixed at a speed of at least 8000 RPM for at least 5 minutes. Further non-limiting embodiments of high shear mixing includes mixing the matrix ingredients and active component(s) at a speed of about 5,000 RPM to about 12,000 RPM for about 10 minutes to about 2 minutes, respectively.
The compositions of the samples are reported on Tables 1 and 2. The emulsions are then spray-dried using an Anhydro PSD55 spray drying unit equipped with a rotary atomizer and a peristaltic delivery pump. Inlet and outlet temperatures were respectively 170°C (± 5°C) and 95°C (± 3°C). The powder was recovered by means of a cyclone separator.

### Stability Results

The compositions from Tables 1 and 2 were tested for oxidative stability by determining the proportion of D-limonene remaining after various periods of storage. The samples were stored at 40°C and 30% relative humidity in LDPE bags of a type that did not provide a barrier to moisture absorption. Samples were analyzed by GC and MS.
The results are shown in Tables 3, 4 and 5. Tables 3 and 4 show the proportion of D-limonene remaining and Table 5 shows the proportion of oxidation by-products present.

**Table 3**

| Stability Study Results-Limonene Levels | | | | | | | |
|---|---|---|---|---|---|---|---|
| Example | Initial | 4 weeks | 8 weeks | 12 weeks | 16 weeks | 20 weeks | 24 weeks |
| A, 15% | 15.81 | 15.65 | 15.17 | 15.11 | 15.08 | 14.95 | 14.88 |
| A, 20% | 20.46 | 19.77 | 19.66 | 19.55 | 19.70 | 19.40 | 19.32 |
| A, 25% | 25.97 | 25.58 | 25.94 | 25.04 | 25.08 | 24.91 | 24.67 |
| B, 15% | 15.09 | 14.46 | 14.45 | 14.47 | 14.49 | 14.48 | 14.36 |
| B, 20% | 19.88 | 19.06 | 19.07 | 18.97 | 19.14 | 19.02 | 19.02 |
| B, 25% | 24.89 | 24.13 | 23.57 | 23.51 | 23.57 | 23.48 | 23.25 |

**Table 4**

| Stability Study Results-Limonene Retention Results | | | | | | | |
|---|---|---|---|---|---|---|---|
| Example | Initial | 4 weeks | 8 weeks | 12 weeks | 16 weeks | 20 weeks | 24 weeks |
| A, 15% | 100 | 99.0 | 96.0 | 95.6 | 95.4 | 94.6 | 94.1 |
| A, 20% | 100 | 96.6 | 96.1 | 95.6 | 96.3 | 94.8 | 94.4 |
| A, 25% | 100 | 98.5 | 99.9 | 96.4 | 96.6 | 95.9 | 95.0 |
| B, 15% | 100 | 95.8 | 95.8 | 95.9 | 96.0 | 96.0 | 95.2 |
| B, 20% | 100 | 95.9 | 95.9 | 95.4 | 96.3 | 95.7 | 95.7 |
| B, 25% | 100 | 96.9 | 94.7 | 94.5 | 94.7 | 94.3 | 93.4 |

**Table 5**

| Stability -Oxidation By-Products Level | | | | | | | |
|---|---|---|---|---|---|---|---|
| Example | Initial | 4 weeks | 8 weeks | 12 weeks | 16 weeks | 20 weeks | 24 weeks |
| A, 15% | 0.66 | 1.13 | 1.15 | 1.41 | 1.34 | 1.84 | 2.10 |
| A, 20% | 0.47 | 0.75 | 1.11 | 1.29 | 1.46 | 1.78 | 2.00 |
| A, 25% | 0.34 | 0.53 | 0.85 | 1.01 | 1.32 | 1.47 | 1.73 |
| B, 15% | 0.41 | 0.82 | 1.27 | 1.55 | 1.43 | 1.66 | 1.94 |
| B, 20% | 0.35 | 0.73 | 0.91 | 1.11 | 1.12 | 1.34 | 1.47 |
| B, 25% | 0.33 | 0.55 | 0.89 | 1.13 | 1.25 | 1.39 | 1.72 |

From Tables 3, 4 and 5 above, it can be seen that the composition of Example B is comparable with the compositions of Example A (control) for stability and retention. Importantly, these results were obtained using no modified starches, maltodextrins or GMO encapsulation ingredients.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. Stable spray-dried particles comprising:
a water-soluble matrix including from 5% to 30% emulsifier; from 20% to 75% filler; and from 20% to 50% mono, di and trisaccharides, based on the total weight of the matrix; and
at least one active component encapsulated in the matrix;
wherein the emulsifier is dextrin and the filler is potato maltodextrin.

2. The stable spray-dried particles according to claim 1, wherein the dextrin is derived from corn.

3. The stable spray-dried particles according to claim 1, wherein the emulsifier is present in an amount of from 10% to 20%, based on the total weight of the matrix.

4. The stable spray-dried particles according to claim 1, wherein the at least one active component is selected from the group consisting of flavour and fragrance ingredients.

5. The stable spray-dried particles according to claim 4, wherein the at least one active component is present in an amount of from 1% to 30%, based on the total weight of the matrix.

6. The stable spray-dried particles according to claim 1, wherein at least 50% of the mono, di and trisccharide material is disaccharide.

7. The stable spray-dried particles according to claim 1, wherein 100% of the mono, di and trisccharide material is sucrose.

8. The stable spray-dried particles according to claim 4, wherein the at least one active component is a citrus oil.

9. A delivery system comprising the stable spray-dried particles according to claim 1.

10. A consumable comprising the stable spray-dried particles according to claim 1.

11. The stable spray-dried particles according to claim 1, wherein the particles have an average particle size of from 50 µm to 100 µm.

## Patentansprüche

1. Stabile sprühgetrocknete Partikel, umfassend:
eine wasserlösliche Matrix, die von 5 % bis 30 % Emulgator; von 20 % bis 75 % Füllstoff; und von 20 % bis 50 % Mono-, Di- und Trisaccharide, bezogen auf das Gesamtgewicht der Matrix, enthält; und
wenigstens eine aktive Komponente, die in der Matrix verkapselt ist;
wobei der Emulgator Dextrin ist und der Füllstoff Kartoffel-Maltodextrin ist.

2. Stabile sprühgetrocknete Partikel gemäß Anspruch 1, wobei das Dextrin aus Mais abgeleitet ist.

3. Stabile sprühgetrocknete Partikel gemäß Anspruch 1, wobei der Emulgator in einer Menge von 10 % bis 20 %, bezogen auf das Gesamtgewicht der Matrix, vorhanden ist.

4. Stabile sprühgetrocknete Partikel gemäß Anspruch 1, wobei die wenigstens eine aktive Komponente ausgewählt ist aus der Gruppe bestehend aus Aromastoff- und Duftstoffbestandteilen.

5. Stabile sprühgetrocknete Partikel gemäß Anspruch 4, wobei die wenigstens eine aktive Komponente in einer Menge von 1 % bis 30 %, bezogen auf das Gesamtgewicht der Matrix, vorhanden ist.

6. Stabile sprühgetrocknete Partikel gemäß Anspruch 1, wobei wenigstens 50 % des Mono-, Di- und Trisaccharidmaterials Disaccharid ist.

7. Stabile sprühgetrocknete Partikel gemäß Anspruch 1, wobei 100 % des Mono-, Di- und Trisaccharidmaterials Saccharose ist.

8. Stabile sprühgetrocknete Partikel gemäß Anspruch 4, wobei die wenigstens eine aktive Komponente ein Citrusöl ist.

9. Abgabesystem, umfassend die stabilen sprühgetrockneten Partikel gemäß Anspruch 1.

10. Verbrauchsgut, umfassend die stabilen sprühgetrockneten Partikel gemäß Anspruch 1.

11. Stabile sprühgetrocknete Partikel gemäß Anspruch 1, wobei die Partikel eine mittlere Partikelgröße von 50 µm bis 100 µm aufweisen.

## Revendications

1. Particules stables séchées par pulvérisation comprenant :
une matrice soluble dans l'eau comprenant de 5 % à 30 % d'émulsifiant ; de 20 % à 75 % de charge ; et de 20 % à 50 % de monosaccharides, de disaccharides et de trisaccharides, sur la base du poids total de la matrice ; et
au moins un composant actif encapsulé dans la matrice ;
l'émulsifiant étant une dextrine et la charge étant une maltodextrine de pomme de terre.

2. Particules stables séchées par pulvérisation selon la revendication 1, la dextrine étant issue de maïs.

3. Particules stables séchées par pulvérisation selon la revendication 1, l'émulsifiant étant présent en une quantité allant de 10 % à 20 %, sur la base du poids total de la matrice.

4. Particules stables séchées par pulvérisation selon la revendication 1, l'au moins un composant actif étant choisi dans le groupe constitué par des ingrédients d'arôme et de fragrance.

5. Particules stables séchées par pulvérisation selon la revendication 4, l'au moins un composant actif étant présent en une quantité allant de 1 % à 30 %, sur la base du poids total de la matrice.

6. Particules stables séchées par pulvérisation selon la revendication 1, au moins 50 % de la matière de monosaccharide, disaccharide et trisaccharide étant un disaccharide.

7. Particules stables séchées par pulvérisation selon la revendication 1, 100 % de la matière de monosaccharide, disaccharide et trisaccharide étant du saccharose.

8. Particules stables séchées par pulvérisation selon la revendication 4, l'au moins un composant actif étant une huile d'agrume.

9. Système d'apport comprenant les particules stables séchées par pulvérisation selon la revendication 1.

10. Produit de consommation comprenant les particules stables séchées par pulvérisation selon la revendication 1.

11. Particules stables séchées par pulvérisation selon la revendication 1, les particules ayant une taille moyenne de particule allant de 50 um à 100 um.
